# EUROPÄISCHE PATENTSCHRIFT

(11) **EP 3 484 732 B1**
(45) Veröffentlichungstag und Bekanntmachung des Hinweises auf die Patenterteilung: **29.04.2020**
(21) Anmeldenummer: 17733971.0
(22) Anmeldetag: 15.05.2017
(51) Int. Cl.: B60C 23/10, B60C 23/12, B60C 23/00

(54) **FAHRZEUGRAD SOWIE VERFAHREN ZUM DRUCKANPASSEN IN EINEM FAHRZEUGRAD**
VEHICLE WHEEL AND METHOD FOR PRESSURE ADJUSTMENT IN A VEHICLE WHEEL
ROUE DE VÉHICULE ET PROCÉDÉ DE RÉGLAGE DE PRESSION DANS UNE ROUE DE VÉHICULE

(30) Priorität: 13.07.2016 DE 102016212704
(43) Veröffentlichungstag der Anmeldung: 22.05.2019
(73) Patentinhaber: Continental Reifen Deutschland GmbH, 30165 Hannover (DE)
(72) Erfinder: KURZ, Martin, 30161 Hannover (DE); MENZ, Rüdiger, 30167 Hannover (DE); STRZELCZYK, Matthias, 31515 Wunstorf (DE); GERHARDT, Joachim, 30890 Barsinghausen (DE); PAUL, Ingo, 30659 Hannover (DE); TREDER, Christian, 31535 Neustadt (DE); KOMISCHKE, Ralf, 31275 Lehrte (DE); SCHULZE, Thomas, 30171 Hannover (DE)
(74) Vertreter: Widjaja, Wira
(86) Internationale Anmeldenummer: PCT/EP2017/061547
(87) Internationale Veröffentlichungsnummer: WO 2018/010874

(56) Entgegenhaltungen:
- DE-A1-102014 104 289
- JP-A- H01 301 405
- US-A1- 2012 031 180

## Beschreibung

Die Erfindung betrifft ein Fahrzeugrad sowie ein Verfahren zum Druckanpassen in einem derartigen Fahrzeugrad.

Fahrzeugräder weisen eine Felge und ein darauf aufgezogenen Fahrzeugreifen auf, zwischen denen ein Reifenvolumen eingeschlossen wird. In dem Reifenvolumen herrscht im Betrieb des Fahrzeugreifens ein vorab festgelegter Reifendruck. Über den Reifendruck wird ein Fahrverhalten des Fahrzeugreifens bestimmt, wobei der Reifendruck sich während der Fahrt aufgrund von beispielsweise thermischen Effekten verändern kann. Weiterhin kann der Reifendruck durch Diffusion über einen längeren Zeitraum abfallen. Durch derartige Veränderungen können sich im laufenden Betrieb des Fahrzeugrades Beeinträchtigungen des Fahrverhaltens, insbesondere eines Rollwiderstandes, ergeben. Ein zu geringer Reifendruck wird meist erst nach einem längeren Zeitraum beispielsweise bei einer routinemäßigen Kontrolle festgestellt.

Gemäß DE 10 2008 054 214 A1 ist vorgesehen, in einer Felge eines schlauchlosen Fahrzeugrades, insbesondere in einem Speichenbereich, eine zweite Luftkammer und somit ein festes, zweites Volumen bereitzustellen, das in bestimmten Betriebszuständen mit einer ein erstes Volumen ausbildenden ersten Luftkammer, die zwischen dem Fahrzeugreifen und der Felge ausgebildet wird, in Strömungsverbindung steht. Die Strömungsverbindung kann über ein dauerhaft öffnendes Ventil ausgebildet werden, beispielsweise in Form eines Drosselventils, oder aber über ein schaltbares Ventil, das entweder aktiv geschaltet wird oder aber selbsttätig beispielsweise in Abhängigkeit einer wirkenden Zentrifugalkraft und somit in Abhängigkeit einer Geschwindigkeit des Fahrzeugrades. Somit kann je nach Strömungsverbindung ein Gesamtvolumen, das aus dem ersten und dem zweiten Volumen gebildet wird, vergrößert werden, um den Reifendruck der Situation anzupassen. Nachteilig hierbei ist, dass das Reifenvolumen nicht stufenlos angepasst werden kann sondern lediglich um das festgelegte, zweite Volumen und ggf. durch weitere in der Felge angeordneten Luftkammern ausgebildete Volumina vergrößert werden kann.

Weitere Fahrzeugräder mit einer Möglichkeit der Druckanpassung während der Fahrt sind beispielsweise aus JP H01 301405 A, DE 10 2014 104289 A1 und US 2012/031180 A1 bekannt.

Aufgabe der Erfindung ist daher, ein Fahrzeugrad bereitzustellen, dessen Fahrverhalten im Betrieb des Fahrzeugreifens in einfacher Weise präzise an eine aktuelle Fahrsituation angepasst werden kann. Weiterhin ist Aufgabe der Erfindung, ein Verfahren zum Druckanpassen in einem Fahrzeugrad bereitzustellen.

Diese Aufgabe wird durch ein Fahrzeugrad nach Anspruch 1 sowie ein Verfahren nach Anspruch 10 gelöst. Bevorzugte Weiterbildungen sind in den Unteransprüchen angegeben.

Demnach ist vorgesehen, in einem Fahrzeugrad ein zweites Volumen in einem Zylinderkörper auszubilden und in dem Zylinderkörper ein beweglichen Kolben anzuordnen. Durch eine Bewegung des Kolbens kann das zweite Volumen angepasst werden, wodurch bei einer ausgebildeten Strömungsverbindung zwischen dem zweiten Volumen und einem durch eine Felge und einen Reifen des Fahrzeugrades eingeschlossenen ersten Volumen das Gesamtvolumen aus beiden Volumina stufenlos verändert werden kann.

Dadurch ist vorteilhafterweise auch im Betrieb des Fahrzeugrades bzw. während der Fahrt ein stufenloses Anpassen eines Reifendruckes durch ein Verändern des zweiten Volumens möglich, da sich bei Verkleinerung bzw. Vergrößerung des zweiten Volumens der wirkende Reifendruck auch vergrößert bzw. verringert. Dadurch können beispielsweise durch Diffusion verursachte Verluste im Reifendruck ausgeglichen werden. Weiterhin kann je nach Fahrsituation der Reifendruck gezielt angepasst werden, so dass Reifeneigenschaften, insbesondere der Rollwiderstand, in Abhängigkeit der Fahrsituation als auch die Haltbarkeit des Fahrzeugrades optimiert werden können. Da das zweite Volumen im Fahrzeugrad angeordnet ist, kann das Bereitstellen eines zusätzlichen Gases zum Erhöhen des Reifendruckes entfallen. Dadurch kann die Zuverlässigkeit erhöht werden, da ein Verlegen von Gasleitungen durch die Nabe entfällt.

Um eine zuverlässige Anpassung des Reifendruckes während der Fahrt zu gewährleisten, ist gemäß einer nicht beanspruchten Ausführungsform vorgesehen, den Kolben im Zylinderkörper in Abhängigkeit einer wirkenden Zentrifugalkraft zu bewegen. Der Kolben ist dazu im Zylinderkörper derartig gelagert, dass dieser aufgrund der auf ihn wirkenden Zentrifugalkraft hin und her bewegt werden kann und dadurch das zweite Volumen verkleinert oder vergrößert wird. Insbesondere wird hierbei das zweite Volumen verkleinert, wenn eine hohe Zentrifugalkraft wirkt, d.h. eine hohe Geschwindigkeit vorliegt, und das zweite Volumen vergrößert, wenn eine geringe Zentrifugalkraft wirkt, d.h. eine geringe Geschwindigkeit vorliegt.

Dadurch ist vorteilhafterweise ein selbstregulierendes Verändern des zweiten Volumens in Abhängigkeit einer Geschwindigkeit des Fahrzeugrades möglich. Somit kann ohne zusätzliche Verstellmechanismen die im Fahrzeugrad ohnehin vorhandene Energie für eine Anpassung des Reifendruckes verwendet werden, wenn zwischen dem ersten und dem zweiten Volumen während der Fahrt eine Strömungsverbindung hergestellt ist. Somit ist keine zusätzlicher Energieaufwand nötig, um den Kolben zu bewegen. Vielmehr wird bei hohen Geschwindigkeiten durch ein Verringern des zweiten Volumens ein derartig hoher Zylinderdruck im zweiten Volumen aufgebaut, dass der Reifendruck erhöht werden kann. Dadurch kann beispielsweise der Rollwiderstand bei hohen Geschwindigkeiten verändert werden, was sich positiv auf das Fahrverhalten und auf die Haltbarkeit des Reifens auswirkt. Bei geringen Geschwindigkeiten hingegen wird selbstregulierend wieder ein für diesen Geschwindigkeitsbereich angemessener niedrigerer Reifendruck eingestellt, da das zweite Volumen wieder vergrößert wird.

Um das Zurückstellen des Kolbens und damit eine Vergrößerung des zweiten Volumens bei geringen Geschwindigkeiten zu unterstützen, ist gemäß einer nicht beanspruchten Weiterbildung der Kolben mit einer gegen die Zentrifugalkraft wirkenden Feder verbunden. Dadurch wird der Kolben bei niedrigen wirkenden Zentrifugalkräften wieder in die Ursprungsstellung zurückgezogen.

Der Kolben steht mit einem elektrisch, magnetisch oder elektropneumatisch gesteuerten Kolbenantrieb, beispielsweise mit einem Motor, in Wirkverbindung. Dadurch kann erreicht werden, dass über ein Betätigungs-Signal eine gezielte elektrische Ansteuerung und somit ein gezieltes Bewegen des Kolbens stattfinden kann. Dies kann beispielsweise dann geschehen, wenn von einer Steuereinrichtung erkannt wird, dass ein Reifendruck zu niedrig ist. Ist dies der Fall, wird der Kolben in entsprechender Weise betätigt, bis der Reifendruck wieder im Normalbereich liegt. Dadurch kann eine einfache Reifendrucküberwachung auch im Betrieb des Fahrzeuges ausgebildet werden, da der Kolbenantrieb auch dann über das Betätigungssignal angesteuert werden kann. Die Ansteuerung kann auch in Abhängigkeit der Geschwindigkeit oder eine Fahrtumgebung stattfinden, so dass der Fahrer in einfacher Weise bei veränderter Umgebung den Reifendruck anpassen kann.

Da eine elektrische Ansteuerung stattfindet, sind lediglich elektrische Leitungen zum Kolbenantrieb zu legen oder aber eine drahtlose Verbindung herzustellen, um den Kolbenantrieb zur Reifendruckanpassung zu steuern. Somit kann der Montageaufwand gegenüber beispielsweise einer externen Gaszufuhr durch die Nabe minimiert und die Zuverlässigkeit erhöht werden.

Gemäß einer vorteilhaften Weiterbildung kann der Zylinderkörper mit dem Kolben und dem zweiten Volumen an einer Speiche des Fahrzeugrades angeordnet sein. Dadurch kann Platz und Montageaufwand gespart werden, da keine zusätzlichen Verstrebungen am Fahrzeugrad anzuordnen sind. Wenn ohnehin eine beispielsweise holzylindrische Speiche vorhanden ist, kann der Zylinderkörper mit dem zweiten Volumen auch in einem Speichen-Innenraum der Speiche angeordnet sein. Dadurch kann der Montageaufwand und der Platz weiter minimiert werden.

Gemäß einer alternativen Ausführungsform kann der Zylinderkörper mit dem zweiten Volumen zumindest teilweise auch in der Felge und/oder zumindest teilweise im ersten Volumen angeordnet sein. Dadurch kann je nach Ausführung der Speichen Platz gespart werden.

Gemäß einer vorteilhaften Weiterbildung ist der Zylinderkörper in radialer Richtung bezüglich des Fahrzeugrades ausgerichtet und der Kolben ist in radialer Richtung beweglich. Dadurch kann vorteilhafterweise erreicht werden, dass die wirkende Zentrifugalkraft in optimaler Weise auf den Kolben übertragen wird. Gleichzeitig kann eine Strömungsverbindung zwischen dem ersten und dem zweiten Volumen vereinfacht werden, da der Zylinderkörper ohnehin in Richtung des ersten Volumens ausgerichtet ist und somit keine zusätzlichen Übertragungsleitungen nötig sind.

Gemäß einer vorteilhaften Ausführungsform ist der Kolben kugelförmig ausgeführt. Durch ein Abweichen von einer zylindrischen Form kann erreicht werden, dass bei der Fahrt wirkende Corioliskräfte den Kolben nicht dadurch verkippen bzw. verkanten, dass dieser einseitig stärker belastet wird. Dadurch kann die Zuverlässigkeit der Druckanpassung erhöht werden.

Gemäß einer nicht beanspruchten Weiterbildung wird die Strömungsverbindung zwischen dem ersten und dem zweiten Volumen durch eine dauerhaft ausgebildete Öffnung gewährleistet. Demnach wird unabhängig vom im zweiten Volumen wirkenden Zylinderdruck das Gesamtvolumen bei einer Betätigung des Kolbens immer verändert. Somit kann ohne großen Aufwand und mit geringen Kosten eine Druckanpassung während der Fahrt gewährleistet werden. In dieser Ausführung ist das erste Volumen dauerhaft mit dem zweiten Volumen verbunden und das dadurch gebildete Gesamtvolumen hermetisch.

Erfindungsgemäß wird die Strömungsverbindung zwischen dem ersten und dem zweiten Volumen durch ein Auslassventil gewährleistet. Das Auslassventil verbindet das erste und das zweite Volumen und regelt einen Gasaustausch zwischen beiden Volumina entweder selbstregulierend, beispielsweise über ein Rückschlagventil, oder über ein elektrisch steuerbares Ventil. Dadurch kann vorteilhafterweise bewirkt werden, dass eine Strömungsverbindung lediglich bei bestimmten Zylinderdrücken im zweiten Volumen erfolgt. Erfindungsgemäß ist eine Strömungsverbindung nur dann nötig, wenn der Zylinderdruck größer oder gleich dem Reifendruck im ersten Volumen ist. In die andere Richtung ist ein Druckausgleich nicht nötig, da der Reifendruck immer nach oben anzupassen ist. Weiterhin kann durch das Auslassventil vorteilhafterweise erreicht werden, dass kein zu hoher Reifendruck eingestellt wird, da das Auslassventil erfindungsgemäß schließt, wenn ein Maximaldruck überschritten ist. Dadurch können die Fahreigenschaften sowie die Haltbarkeit des Reifens verbessert werden.

Um bei einem geschlossenen Auslassventil das Zurückstellen des Kolbens zu ermöglichen, ist gemäß einer Ausführungsform ein Einlassventil im Zylinderkörper oder im Kolben vorgesehen, das nach dem Schließen des Auslassventils das Einströmen von Gas in das zweite Volumen ermöglicht. Dadurch kann das zweite Volumen wieder vergrößert werden und der Kolben in seine Ursprungsstellung zurückkehren. Die Steuerung des Einlassventils kann beispielsweise elektrisch erfolgen. Es ist aber auch ein selbstregulierendes Umschalten möglich, beispielsweise durch einen beim Zurückstellen aufgebauten Unterdruck im zweiten Volumen. Gemäß dieser Ausführung sind das erste und das zweite Volumen lediglich bei ausgebildeter Strömungsverbindung über das Auslassventil hermetisch. Beim Zurückstellen des Kolbens wird das zweite Volumen zum Auffüllen des Systems über das Einlassventil belüftet.

Gemäß einer vorteilhaften Weiterbildung kann zwischen dem ersten Volumen und dem zweiten Volumen ein Speichervolumen angeordnet sein, das das erste und das zweite Volumen miteinander verbindet. Dabei kann zunächst das zweite Volumen mit dem Speichervolumen verbunden werden, um darin einen Speicherdruck aufzubauen. Wenn dieser benötigt wird, kann Gas aus dem Speichervolumen in das erste Volumen eingelassen werden, um den Reifendruck anzupassen. Das Gas mit einem hohen Druck wird somit in einfacher Weise zwischengespeichert. Dadurch kann vorteilhafterweise auch dann Druck aufgebaut werden, wenn der Kolben gerade nicht für eine Volumenverkleinerung bewegt werden kann, beispielsweise wenn die Zentrifugalkraft gerade zu niedrig ist.

Anhand von Ausführungsbeispielen soll die Erfindung im Folgenden näher erläutert werden. Es zeigen:
- Fig. 1: ein Fahrzeugrad mit einer elektrisch geregelten Kolbenverstellung;
- Fig. 2: ein Fahrzeugrad mit einer selbstregulierenden Kolbenverstellung;
- Fig. 3: ein Fahrzeugrad mit einer selbstregulierenden Strömungsverbindung der beiden Volumina;
- Fig. 4: ein Fahrzeugrad mit kugelförmigen Kolben; und
- Fig. 5: ein Fahrzeugrad mit einem zusätzlichen Speichervolumen.

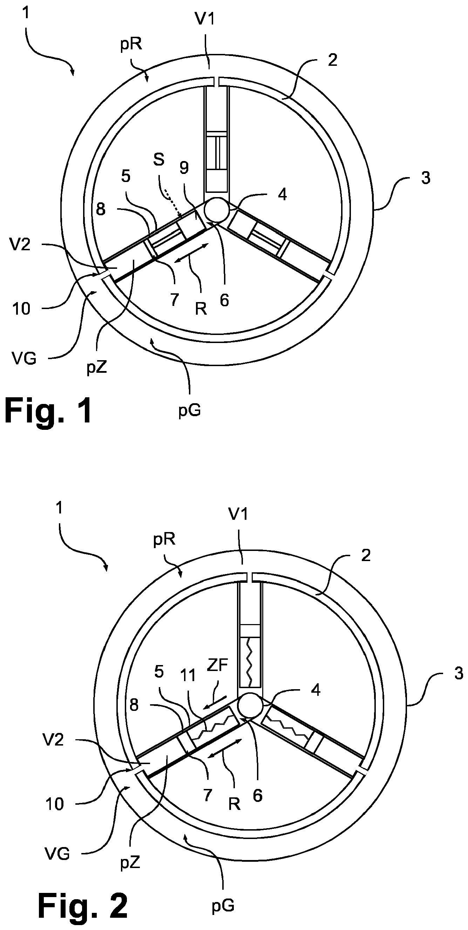

Gemäß Figur 1 ist ein Fahrzeugrad 1 mit einer Felge 2 und einem darauf aufgezogenen Reifen 3, einer Nabe 4 sowie drei zwischen der Nabe 4 und der Felge 2 angeordnete Speichen 5. Über die Nabe 4 wird das Fahrzeugrad 1 in allseits bekannter Weise gelagert, sodass sich das Fahrzeugrad 1 während des Betriebs drehen kann. Zwischen dem Reifen 3 und der Felge 2 wird ein gegenüber einem Außenbereich abgedichtetes erstes Volumen V1 ausgebildet, in dem ein bestimmter Reifendruck pR vorherrscht.

Gemäß diesem Ausführungsbeispiel sind die Speichen 5 in etwa hohlzylindrisch ausgeführt, wobei in einem Speichen-Innenraum 6 ein Kolben 7 angeordnet ist, der im Speichen-Innenraum 6 hin und her bewegt werden kann. Zur sicheren Lagerung des Kolbens 7 ist im Speichen-Innenraum 6 ein zusätzlicher Zylinderkörper 8 vorgesehen. Zwischen dem Kolben 7 und der Felge 2 wird im Zylinderkörper 8 ein in einer radialen Richtung R ausgedehntes zweites Volumen V2 definiert, das gemäß dieser Ausführungsform gegenüber dem restlichen Zylinderkörper 8 hermetisch ist. Demnach gelangt ein in dem zweiten Volumen V2 befindliches Gas - beispielsweise Luft - mit einem Zylinderdruck pZ im Zylinderkörper 8 nicht in den Bereich zwischen dem Kolben 7 und der Nabe 4. In dem Bereich zwischen dem Kolben 7 und der Nabe 4 ist gemäß diesem Ausführungsbeispiel im Zylinderkörper 8 ein Kolbenantrieb 9 angeordnet, der bewirkt, dass sich der Kolben 7 im Zylinderkörper 8 in radialer Richtung R hin und her bewegt. Der Kolbenantrieb 9 kann dazu beispielsweise als ein elektrisch, magnetisch oder elektropneumatisch gesteuerter Mechanismus beispielsweise mit einem Motor ausgeführt sein, der in Abhängigkeit eines elektrischen Betätigungs-Signals S betätigt wird und somit den Kolben 7 auf und/oder ab bewegt.

Ein derartiger Aufbau ist in jeder Speiche 5 identisch vorgesehen, so dass im Speichen-Innenraum 6 jeweils ein veränderliches zweites Volumen V2 bereitgestellt wird. In den Figuren sind die Bezugszeichen der Übersichtlichkeit halber lediglich für eine Speiche 5 gezeigt.

Gemäß dem Ausführungsbeispiel in Fig. 1 ist das zweite Volumen V2 mit dem ersten Volumen V1 direkt über eine Öffnung 10 verbunden, so dass das erste Volumen V1 und das zweite Volumen V2 zusammen ein Gesamtvolumen VG ausbilden, das der Summe der beiden Volumina V1, V2 entspricht und das hermetisch ist. Im Gesamtvolumen VG wirkt dann ein einheitlicher Gesamtdruck pG, d.h. der Reifendruck pR und der Zylinderdruck pZ sind im Wesentlichen identisch.

Durch den Kolbenantrieb 9 ist es somit möglich, das Gesamtvolumen VG über die Stellung des Kolbens 7 stufenlos zu verändern, wobei diese stufenlose Veränderung des Gesamtvolumens VG auch im Betrieb des Fahrzeugrades 1 stattfinden kann, da der Kolbenantrieb 9 über das Betätigungs-Signal S auch während der Fahrt vorgegeben werden kann. Durch die stufenlose Veränderung des Gesamtvolumens VG wird bewirkt, dass sich auch der Gesamtdruck pG im Gesamtvolumen VG stufenlos verändert, da beim Verändern des Gesamtvolumens VG keine neue Luft von außen hinzugefügt wird. Dadurch kann in Abhängigkeit der Fahrsituation, aus der das Betätigungs-Signal S generiert wird, der Gesamtdruck pG angepasst werden, in dem entsprechend der Fahrsituation das Betätigungs-Signal S an den Kolbenantrieb 9 ausgegeben wird.

Gemäß einer alternativen, in Figur 2 dargestellten Ausführungsform ist zur Verstellung der Kolben 7 kein Kolbenantrieb 9 vorgesehen. Vielmehr werden die Kolben 7 durch eine im Betrieb des Fahrzeugreifens 1 wirkende Zentrifugalkraft FZ im Zylinderkörper 8 in radialer Richtung R hin und her bewegt, sodass sich das Gesamtvolumen VG in Abhängigkeit der aktuell wirkenden Zentrifugalkraft FZ verkleinert oder vergrößert. Bei einer hohen Geschwindigkeit des Fahrzeugrades 1 wird der Kolben 7 radial gegen eine Feder 11 nach außen gedrückt, wodurch sich das Gesamtvolumen VG verkleinert, da sich das zweite Volumen V2 verringert. Dadurch steigt der Gesamtdruck pG. Im Stillstand des Fahrzeugrades 1 bzw. bei geringen Geschwindigkeiten und somit geringerer Zentrifugalkraft FZ wird der Kolben 7 durch die Feder 11 in seine Ursprungsstellung zurückgezogen. Das Zurückziehen kann aber auch ohne Feder 11 geschehen, da die Kolben 7 bei geringen Geschwindigkeiten durch die Schwerkraft wieder radial in Richtung der Nabe 4 fallen. Die Feder 11 kann das Zurückziehen lediglich unterstützen.

Dadurch kann selbstregelnd der Reifendruck pR im Reifen 3 angepasst werden, um den Rollwiderstand und die Haltbarkeit des Fahrzeugrades 1 positiv zu beeinflussen und somit den Reifendruck PR während der Fahrt einer bestimmten Fahrsituation anzupassen.

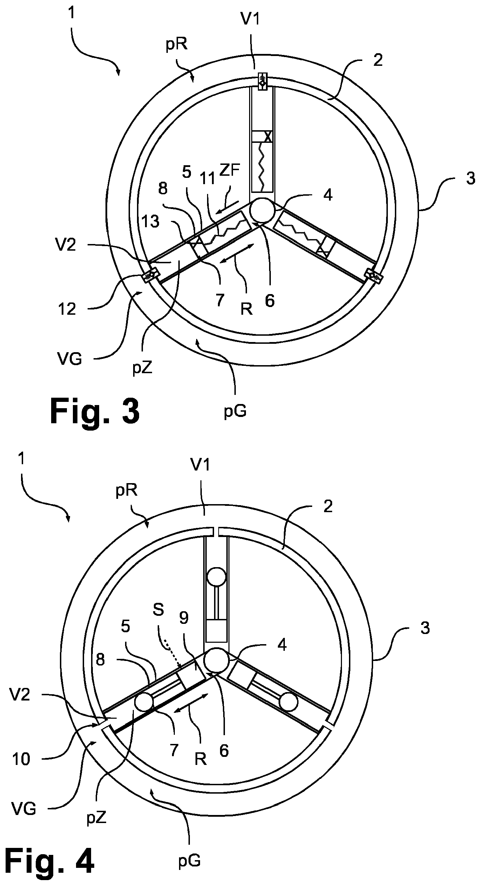

Gemäß einem weiteren Ausführungsbeispiel in Figur 3, werden die Kolben 7 ebenfalls durch die wirkende Zentrifugalkraft ZF bewegt. Im Unterschied zu Figur 2 ist zwischen dem ersten Volumen V1 und dem zweiten Volumen V2 ein Auslassventil 12, beispielweise ein Rückschlagventil, angeordnet, das das erste Volumen V1 mit dem zweiten Volumen V2 erst dann verbindet, wenn der Zylinderdruck pZ im zweiten Volumen V2 einen Öffnungsdruck pO übersteigt. Wird demnach bei einer bestimmten Zentrifugalkraft FZ der Kolben 7 radial soweit nach außen bewegt, dass der Zylinderdruck pZ den Öffnungsdruck pO übersteigt, wird das Auslassventil 12 geöffnet und das zweite Volumen V2 mit dem ersten Volumen V1 verbunden. Ist das Auslassventil 14 als Rückschlagventil ausgeführt, entspricht der Öffnungsdruck pO im Wesentlichen dem Reifendruck pR. Dadurch wird das Auslassventil 14 immer nur dann geöffnet, wenn der Zylinderdruck pZ den Reifendruck pR übersteigt. Durch das Öffnen des Auslassventils 12 kann somit der Reifendruck pR erhöht werden.

Durch eine derartige Anordnung mit einem Auslassventil 12 können insbesondere Druckverluste im ersten Volumen V1 ausgeglichen werden, die beispielsweise dadurch auftreten, dass die Luft bzw. das Gas im Reifen 3 durch diesen hindurch diffundiert. Sind die Auslassventile 12 als Rückschlagventile ausgeführt, wird der Reifendruck pR bei hohen Geschwindigkeiten erhöht, um einen Diffusionsverlust auszugleichen. Bei niedrigen Geschwindigkeiten bleibt der Reifendruck pR auch dann erhalten, wenn der Kolben 7 wieder in seine Ursprungsstellung zurückgeht, da das Rückschlagventil dann automatisch wieder schließt und einen Druckausgleich zwischen dem ersten Volumen V1 und dem zweiten Volumen V2 verhindert.

Um diese Bewegung des Kolbens 7 in seine Ursprungsstellung zu ermöglichen, ist im Kolben 7 ein zusätzliches Einlassventil 13 vorgesehen, das bewirkt, dass Luft beim Zurückstellen des Kolbens 7 in das zweite Volumen V2 nachströmen kann und somit das System bzw. das zweite Volumen V2 wieder aufgefüllt wird. Das Einlassventil 13 kann auch seitlich im Zylinderkörper 8 vorgesehen sein, um für ein Nachströmen von Luft in das zweite Volumen V2 zu sorgen. Bei geöffnetem Auslassventil 12 und geschlossenem Einlassventil 13 ist somit das Gesamtvolumen VG hermetisch, während bei einem geöffneten Einlassventil 13 und geschlossenen Auslassventil 12 lediglich das erste Volumen V1 abgedichtet ist und das zweite Volumen V2 belüftet wird. Das Einlassventil 13 wird hierbei entweder elektrisch gesteuert oder aber selbstregulierend, beispielsweise in Abhängigkeit von dem beim Zurückstellen vorherrschenden Unterdruck im zweiten Volumen V2.

Um im Ausführungsbeispiel gemäß Figur 3 zu verhindern, dass der Reifendruck pR zu hoch wird, kann das Auslassventil 12 derartig ausgebildet sein, dass dieses lediglich dann öffnet, wenn der Reifendruck pR im ersten Volumen V1 ein Maximaldruck pM nicht überschreitet. Das Auslassventil 12 öffnet somit lediglich bei Zylinderdrücken pZ, die größer sind als der Öffnungsdruck pO und kleiner als der Maximaldruck pM.

Die Auslassventile 14 können statt als Rückschlagventile auch als elektrisch gesteuerte Ventile ausgeführt sein, die elektrisch gesteuert beispielsweise dann geöffnet werden, wenn durch eine Luftdruckkontrolle festgestellt wurde, dass der Reifendruck pR im ersten Volumen V1 zu gering ist. Gleichzeit wird dann der Kolbenantrieb 9 betätigt, so dass über eine Verkleinerung des zweiten Volumens V2 ein Gesamtdruck pG erhöht wird. Stellt sich dadurch ein ausreichender Reifendruck pR ein, wird das steuerbare Ventil wieder geschlossen.

Um zu verhindern, dass sich die Kolben 7 im Zylinderkörper 8 im Betrieb des Fahrzeugrades 1 verkanten kann, ist gemäß Figur 4 vorgesehen, die Kolben 7 kugelförmig auszuführen. Dadurch kann ein Festsetzen des Kolbens 7 beispielsweise bei seitlich wirkenden Coriolis-Kräften aufgrund eines normalerweise nicht-idealen Drehverhaltens des Fahrzeugrades 1 vermieden werden. Die kugelförmige Ausführung kann hierbei in entsprechender Weise auch für die Ausführungen gemäß Fig. 2 und Fig. 3 vorgesehen sein.

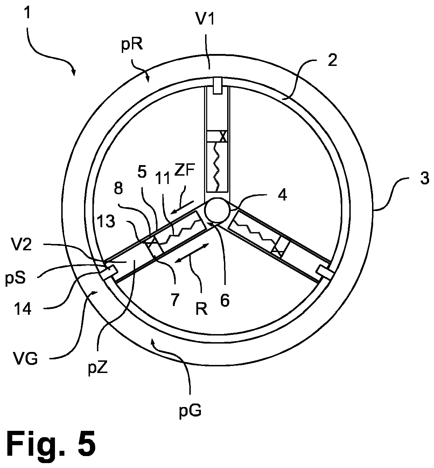

Ergänzend kann gemäß Fig. 5 vorgesehen sein, zwischen dem ersten Volumen V1 und dem zweiten Volumen V2 ein Speichervolumen 14 anzuordnen. Dieses dient dazu, Gas mit dem Zylinderdruck pZ aus dem zweiten Volumen V2 mit einem bestimmten Speicherdruck pS zwischen zu speichern. Wird demnach bei einer bestimmten Geschwindigkeit durch die wirkende Zentrifugalkraft ZF oder auf Anforderung zur Betätigung des Kolbens 7 ein bestimmter Zylinderdruck pZ erreicht, wird das Gas zunächst in das Speichervolumen 14 gefördert. Ist - auch bei geringen Geschwindigkeiten - eine Anpassung des Reifendrucks pR im ersten Volumen V1 gewünscht, wird das Speichervolumen 14 mit dem ersten Volumen V1 verbunden, sodass bei entsprechend hohem Speicherdruck pS im Speichervolumen 14 der Reifendruck pR erhöht werden kann. Das Öffnen des Speichervolumens 14 kann hierbei elektrisch gesteuert erfolgen, wenn beispielsweise über eine Luftdruckkontrolle festgestellt wird, dass im ersten Volumen V1 der Reifendruck pR unter einen bestimmten Wert gefallen ist. Die Verbindung zum zweiten Volumen V2 kann beispielsweise über ein Rückschlagventil erfolgen, so dass das Speichervolumen 14 immer dann aufgefüllt wird, wenn ein ausreichender Zylinderdruck pZ im zweiten Volumen V2 bereitgestellt wird.

### Bezugszeichenliste

- 1: Fahrzeugrad
- 2: Felge
- 3: Reifen
- 4: Nabe
- 5: Speichen
- 6: Speichen-Innenraum
- 7: Kolben
- 8: Zylinderkörper
- 9: Kolbenantrieb
- 10: Öffnung
- 11: Feder
- 12: Auslassventil
- 13: Einlassventil
- 14: Speichervolumen

- R: radiale Richtung
- pG: Gesamtdruck
- pM: Maximaldruck
- pO: Öffnungsdruck
- pR: Reifendruck
- pS: Speicherdruck
- pZ: Zylinderdruck
- S: Betätigungs-Signal
- V1: erstes Volumen
- V2: zweites Volumen
- VG: Gesamtvolumen

## Patentansprüche

1. Fahrzeugrad (1) mit einer Felge (2), einem auf die Felge (2) aufgezogenen Reifen (3), wobei die Felge (2) und der Reifen (3) ein erstes Volumen (V1) einschließen, sowie einem zweiten Volumen (V2),
wobei zwischen dem ersten Volumen (V1) und dem zweiten Volumen (V2) im Betrieb des Fahrzeugrades (1) eine Strömungsverbindung (10, 12) ausbildbar ist zum Bereitstellen eines Gesamtvolumens (VG),
wobei das Gesamtvolumen (VG) bei ausgebildeter Strömungsverbindung (10, 12) hermetisch ist,
das zweite Volumen (V2) in einem Zylinderkörper (8) ausgebildet ist und in dem Zylinderkörper (8) ein beweglicher Kolben (7) angeordnet ist, wobei durch eine Bewegung des Kolbens (7) bei ausgebildeter Strömungsverbindung (10, 12) das Gesamtvolumen (VG) durch ein Anpassen des zweiten Volumens (V2) stufenlos veränderbar ist zum stufenlosen Einstellen eines Reifendruckes (pR) im ersten Volumen (V1) durch Anpassen des zweiten Volumens (V2), wobei
der Kolben (7) mit einem elektrisch und/oder elektropneumatisch und/oder elektromagnetisch gesteuerten Kolbenantrieb (9) in Wirkverbindung steht, zum elektrisch gesteuerten Bewegen des Kolbens (7) im Zylinderkörper (8)
**dadurch gekennzeichnet, dass**
die Strömungsverbindung zwischen dem ersten und dem zweiten Volumen (V1, V2) durch ein Auslassventil (12) gewährleistet ist, wobei das Auslassventil (12) ein selbstregulierendes Auslassventil, beispielsweise ein Rückschlagventil, oder ein elektrisch steuerbares Ventil ist,
wobei das Auslassventil (12) das erste Volumen (V1) mit dem zweiten Volumen (V2) lediglich dann verbindbar ist, falls ein im zweiten Volumen (V2) vorherrschender Zylinderdruck (pZ) einen Öffnungsdruck (pO) überschreitet und/oder einen Maximaldruck (pM) unterschreitet.

2. Fahrzeugrad (1) nach Anspruch 1, **dadurch gekennzeichnet, dass** der Zylinderkörper (8) an einer Speiche (5) des Fahrzeugrades (1) angeordnet ist.

3. Fahrzeugrad (1) nach Anspruch 2, **dadurch gekennzeichnet, dass** der Zylinderkörper (8) in einem Speichen-Innenraum (6) der Speiche (5) des Fahrzeugrades (1) angeordnet ist.

4. Fahrzeugrad (1) nach Anspruch 1, **dadurch gekennzeichnet, dass** der Zylinderkörper (8) zumindest teilweise in der Felge (2) und/oder zumindest teilweise im ersten Volumen (V1) angeordnet ist.

5. Fahrzeugrad (1) nach einem der vorhergehenden Ansprüche, **dadurch gekennzeichnet, dass** der Zylinderkörper (8) in radialer Richtung (R) bezüglich des Fahrzeugrades (1) ausgerichtet ist und der Kolben (7) in radialer Richtung (R) beweglich ist.

6. Fahrzeugrad (1) nach einem der vorhergehenden Ansprüche, **dadurch gekennzeichnet, dass** der Kolben (7) zylinderförmig oder kugelförmig ist.

7. Fahrzeugrad (1) nach einem der vorhergehenden Ansprüche, **dadurch gekennzeichnet, dass** der Öffnungsdruck (pO) dem im ersten Volumen (V1) vorherrschenden Reifendruck (pR) entspricht.

8. Fahrzeugrad (1) nach einem der vorhergehenden Ansprüche, **dadurch gekennzeichnet, dass** im Zylinderkörper (8) oder im Kolben (7) ein vorzugsweise elektrisch steuerbares oder selbstregulierendes Einlassventil (13) vorgesehen ist zum Belüften des zweiten Volumens (V2) bei nicht-ausgebildeter Strömungsverbindung (12) zum Ermöglichen einer Rückstellung des Kolbens (7) in seine Ursprungsstellung bei geschlossenem Auslassventil (12).

9. Fahrzeugrad (1) nach einem der vorhergehenden Ansprüche, **dadurch gekennzeichnet, dass** das zwischen dem ersten Volumen (V1) und dem zweiten Volumen (V2) ein Speichervolumen (14) angeordnet ist, wobei das Speichervolumen (14) mit dem zweiten Volumen (V2) verbindbar ist zum Speichern von Gas mit einem Speicherdruck (pS) und das gespeicherte Gas mit dem Speicherdruck (pS) aus dem Speichervolumen (14) in das erste Volumen (V1) einleitbar ist.

10. Verfahren zum Druckanpassen in einem Fahrzeugrad (1) nach einem der vorhergehenden Ansprüche, mit mindestens den folgenden Schritten:
- Auslesen eines aktuellen Reifendruckes (pR);
- Bewegen des Kolbens (7) im Zylinderkörper (8) über einen Kolbenantrieb (9), falls eine Anpassung des Reifendruckes (pR) gewünscht ist, wobei durch das Bewegen des Kolbens (7) das zweite Volumen (V2) angepasst wird;
- Ausbilden einer Strömungsverbindung (12) zwischen dem ersten Volumen (V1) und dem zweiten Volumen (V2) zum Bereitstellen eines hermetischen Gesamtvolumens (VG), wobei die Strömungsverbindung (12) nur dann hergestellt wird, wenn der im zweiten Volumen vorherrschende Zylinderdruck (pZ) größer oder gleich dem Reifendruck (pR) und kleiner als ein Maximaldruck (pM) ist, und wobei das Gesamtvolumen (VG) und somit auch der Reifendruck (pR) durch eine Veränderung des zweiten Volumens (V2) angepasst werden.

## Claims

1. Vehicle wheel (1) having a rim (2), a tyre (3) which is fitted onto the rim (2), the rim (2) and the tyre (3) enclosing a first volume (V1), and having a second volume (V2), it being possible for a flow connection (10, 12) to be configured between the first volume (V1) and the second volume (V2) during operation of the vehicle wheel (1) in order to provide an overall volume (VG), the overall volume (VG) being hermetic in the case of a configured flow connection (10, 12), the second volume (V2) being configured in a cylinder body (8), and a movable piston (7) being arranged in the cylinder body (8), it being possible for the overall volume (VG) to be changed in an infinitely variable manner by way of an adaptation of the second volume (V2), by way of a movement of the piston (7) in the case of a configured flow connection (10, 12), in order to set a tyre pressure (pR) in the first volume (V1) in an infinitely variable manner by way of adaptation of the second volume (V2), the piston (7) being operatively connected to an electrically and/or electropneumatically and/or electromagnetically controlled piston drive (9), for moving the piston (7) in the cylinder body (8) in an electrically controlled manner, **characterized in that** the flow connection between the first and the second volume (V1, V2) is ensured by way of an outlet valve (12), the outlet valve (12) being a self-regulating outlet valve, for example a check valve, or an electrically controllable valve, it being possible for the outlet valve (12) to connect the first volume (V1) to the second volume (V2) merely if a cylinder pressure (pZ) which prevails in the second volume (V2) exceeds an opening pressure (pO) and/or undershoots a maximum pressure (pM).

2. Vehicle wheel (1) according to Claim 1, **characterized in that** the cylinder body (8) is arranged on a spoke (5) of the vehicle wheel (1).

3. Vehicle wheel (1) according to Claim 2, **characterized in that** the cylinder body (8) is arranged in a spoke interior space (6) of the spoke (5) of the vehicle wheel (1).

4. Vehicle wheel (1) according to Claim 1, **characterized in that** the cylinder body (8) is arranged at least partially in the rim (2) and/or at least partially in the first volume (V1).

5. Vehicle wheel (1) according to one of the preceding claims, **characterized in that** the cylinder body (8) is oriented in the radial direction (R) with regard to the vehicle wheel (1), and the piston (7) can be moved in the radial direction (R).

6. Vehicle wheel (1) according to one of the preceding claims, **characterized in that** the piston (7) is cylindrical or spherical.

7. Vehicle wheel (1) according to one of the preceding claims, **characterized in that** the opening pressure (pO) corresponds to the tyre pressure (pR) which prevails in the first volume (V1).

8. Vehicle wheel (1) according to one of the preceding claims, **characterized in that** a preferably electrically controllable or self-regulating inlet valve (13) is provided in the cylinder body (8) or in the piston (7) for ventilating the second volume (V2) in the case of a non-configured flow connection (12) in order to make a return of the piston (7) into its original position in the case of a closed outlet valve (12) possible.

9. Vehicle wheel (1) according to one of the preceding claims, **characterized in that** an accumulator volume (14) is arranged between the first volume (V1) and the second volume (V2), it being possible for the accumulator volume (14) to be connected to the second volume (V2) in order to store gas at an accumulator pressure (pS), and it being possible for the stored gas to be introduced at the accumulator pressure (pS) from the accumulator volume (14) into the first volume (V1).

10. Method for adapting the pressure in a vehicle wheel (1) according to one of the preceding claims, having at least the following steps:
- reading of an actual tyre pressure (pR);
- moving of the piston (7) in the cylinder body (8) via a piston drive (9) if an adaptation of the tyre pressure (pR) is desired, the second volume (V2) being adapted by way of the moving of the piston (7);
- configuring of a flow connection (12) between the first volume (V1) and the second volume (V2) in order to provide a hermetic overall volume (VG), the flow connection (12) being established only when the cylinder pressure (pZ) which prevails in the second volume is greater than or equal to the tyre pressure (pR) and less than a maximum pressure (pM), and the overall volume (VG) and therefore also the tyre pressure (pR) being adapted by way of a change of the second volume (V2).

## Revendications

1. Roue de véhicule (1) comprenant une jante (2), un pneumatique (3) monté sur la jante (2), la jante (2) et le pneumatique (3) renfermant un premier volume (V1), et un deuxième volume (V2),
une liaison d'écoulement (10, 12) pouvant être formée entre le premier volume (V1) et le deuxième volume (V2) pendant le fonctionnement de la roue de véhicule (1) afin de produire un volume total (VG), le volume total (VG) étant hermétique lorsque la liaison d'écoulement (10, 12) est formée,
le deuxième volume (V2) étant formé dans un corps de cylindre (8) et un piston mobile (7) étant disposé dans le corps de cylindre (8), le volume total (VG) pouvant être modifié en continu par adaptation du deuxième volume (V2), par un mouvement du piston (7) lorsque la liaison d'écoulement (10, 12) est formée, pour régler en continu la pression de pneumatique (pR) dans le premier volume (V1) par adaptation du deuxième volume (V2),
le piston (7) étant relié fonctionnellement à un entraînement de piston (9) commandé par des moyens électriques et/ou électropneumatiques et/ou électromagnétiques pour déplacer de manière commandée électriquement le piston (7) dans le corps de cylindre (8)
**caractérisé en ce que**
la liaison d'écoulement entre le premier et le deuxième volume (V1, V2) est assurée par une vanne de sortie (12), la vanne de sortie (12) étant une vanne de sortie autorégulée, par exemple un clapet anti-retour, ou une vanne à commande électrique,
la vanne de sortie (12) pouvant relier le premier volume (V1) au deuxième volume (V2) seulement si une pression de cylindre (pZ) régnant dans le deuxième volume (V2) devient supérieure à une pression d'ouverture (pO) et/ou inférieure à une pression maximale (pM).

2. Roue de véhicule (1) selon la revendication 1, **caractérisée en ce que** le corps de cylindre (8) est disposé sur un rayon (5) de la roue de véhicule (1).

3. Roue de véhicule (1) selon la revendication 2, **caractérisée en ce que** le corps de cylindre (8) est disposé dans un espace intérieur (6) du rayon (5) de la roue de véhicule (1).

4. Roue de véhicule (1) selon la revendication 1, **caractérisée en ce que** le corps de cylindre (8) est disposé au moins en partie dans la jante (2) et/ou au moins en partie dans le premier volume (V1).

5. Roue de véhicule (1) selon l'une des revendications précédentes, **caractérisée en ce que** le corps de cylindre (8) est orienté dans la direction radiale (R) par rapport à la roue de véhicule (1) et le piston (7) est mobile dans la direction radiale (R).

6. Roue de véhicule (1) selon l'une des revendications précédentes, **caractérisée en ce que** le piston (7) est de forme cylindrique ou sphérique.

7. Roue de véhicule (1) selon l'une des revendications précédentes, **caractérisée en ce que** la pression d'ouverture (pO) correspond à la pression de pneumatique (pR) régnant dans le premier volume (V1).

8. Roue de véhicule (1) selon l'une des revendications précédentes, **caractérisée en ce qu'**une vanne d'admission (13) de préférence à commande électrique ou autorégulatrice est prévue dans le corps de cylindre (8) ou dans le piston (7) pour purger le deuxième volume (V2) à un niveau lorsque la liaison d'écoulement (12) n'est pas formée afin de permettre au piston (7) de revenir à sa position d'origine lorsque la vanne de sortie (12) est fermée.

9. Roue de véhicule (1) selon l'une des revendications précédentes, **caractérisée en ce qu'**un volume de stockage (14) est ménagé entre le premier volume (V1) et le deuxième volume (V2), le volume de stockage (14) pouvant être relié au deuxième volume (V2) pour stocker du gaz à une pression de stockage (pS) et le gaz stocké pouvant être transféré, à la pression de stockage (pS), du volume de stockage (14) dans le premier volume (V1).

10. Procédé d'adaptation de pression dans une roue de véhicule (1) selon l'une des revendications précédentes, ledit procédé comprenant au moins les étapes suivantes :
- lire une pression de pneumatique actuelle (pR) ;
- déplacer le piston (7) dans le corps de cylindre (8) par le biais d'un entraînement de piston (9) si une adaptation de la pression de pneumatique (pR) est souhaitée, le deuxième volume (V2) étant adapté par déplacement du piston (7) ;
- former une liaison d'écoulement (12) entre le premier volume (V1) et le deuxième volume (V2) pour produire un volume total (VG) hermétique, la liaison d'écoulement (12) n'étant établie que lorsque la pression de cylindre (pZ) régnant dans le deuxième volume est supérieure ou égale à la pression de pneumatique (pR) et inférieure à une pression maximale (pM), et le volume total (VG) et donc aussi la pression de pneumatique (pR) étant adaptés par modification du deuxième volume (V2).
